# EUROPEAN PATENT APPLICATION

(11) **EP 3 032 869 A1**
(43) Date of publication of application: **15.06.2016**
(21) Application number: 15198155.2
(22) Date of filing: 28.03.2012
(51) Int. Cl.: H04W 28/04, G06Q 10/00, G06Q 10/06, G06Q 50/34, H04L 29/02, H04L 1/08, H04L 1/18, G07C 13/00

(54) **COMMUNICATION METHOD, AND SHAREHOLDERS MEETING VOTING RIGHT COUNTING SYSTEM**

(30) Priority: 29.03.2011 JP 2011073007
(62) Divisional of application: 12763651.2
(71) Applicant: Saito, Shoji, Tokyo 111-0053 (JP)
(72) Inventor: Saito, Shoji, Tokyo 111-0053 (JP)
(74) Representative: Schweiger, Martin

(57) **Abstract**

In a wireless communication system 1 comprising a plurality of communication terminals 2 and a control terminal 3, when the control terminal 3 receives the information data 400 transmitted from each of the plurality of communication terminals 2, the control terminal 3 identifies each of the communication terminals as a transmission source of the information data 400 and transmits a data receipt acknowledgement to each of the communication terminals 2; and each of the plurality of communication terminals 2 repeatedly transmits the information data 400 to the control terminal 3 until receiving the data receipt acknowledgement and, after a predetermined duration passes from an initial transmission of the information data 400 or after predetermined time comes, suspends transmission of the information data 400 until a retransmission request is received from the control terminal 3. According to such a communication method, even when a large number of transmission side terminals transmit data to a receiving side terminal via a wireless communication, all data can be received in a short time to complete the communication.

## Description

### TECHNICAL FIELD

The present invention relates to a communication method in a wireless communication system and a voting right counting system for shareholders meeting using the communication method.

### BACKGOUND ART

When exchanging data between a plurality of terminals by using wireless communication, it is normally configured that, when data is transmitted from a transmitting-side terminal to a receiving-side terminal, a receipt acknowledgement signal called ACK is sent from the receiving-side terminal which received the data to the transmitting-side terminal, so that it is confirmed at the transmitting-side terminal that the data transmission is correctly done. Namely, one data communication is completed when a transmitting-side terminal confirms one ACK corresponding to one data transmission.

When performing data transmission from a plurality of transmitting-side terminals to one receiving-side terminal, each of the transmitting-side terminals confirms one ACK corresponding to one data transmission, and as a result that the all transmitting-side terminals confirm an ACK, the data communication as a whole completes.

A system for conducting a vote by using a plurality of voting terminals in a meeting, etc. and counting the voting result in one control terminal will be considered as an example. The plurality of voting terminals (transmitting-side terminals) almost simultaneously send data including a voting content to the control terminal (receiving-side terminal). The control terminal having received the data including a voting content sends ACK sequentially to the voting terminals as transmission sources of receipt-acknowledged data.

When the ACK does not return from the control terminal, the voting terminal sends voting data again so as to complete the transmission of the voting data. While repeating retransmitting, the control terminal receives voting data from all of the voting terminals and sends ACK to all of the voting terminals, so that data communication as a whole completes eventually. As the number of voting terminals increases, it becomes longer to complete the data communication as a whole.

### SUMMARY OF THE INVENTION

### Problem to be Solved by the Invention

Here, if the number of the voting terminals increases, there is a disadvantage that voting data cannot be received correctly at the control terminal due to an interference of radio waves when the voting data is transmitted at the same time to the control terminal. If data cannot be received correctly, the ACK cannot be returned from the control terminal to the voting terminals and voting terminals keep on retransmitting voting data. Then, an interference of radio waves is repeated furthermore, which ends up in the situation that transmission of voting data from all of the voting terminals can never be completed or it requires an extremely long time to complete transmission of all data.

The present invention was made in consideration of the above situations and has an object thereof to provide a communication method in a wireless communication system capable of receiving all data in a short time to complete communication even in the case where data is transmitted from a large number of transmitting-side terminals to a receiving-side terminal via a wireless communication.

Another object is to provide a voting right counting system for shareholders meeting wherein, by adopting the communication method as such, results of exercising voting rights by shareholders can be counted correctly in real time with no counting mistakes.

### Means for Solving the Problem(s)

To attain the above objects, the present invention firstly provides a communication method in a wireless communication system, comprising a plurality of communication terminals having a wireless communication function based on a predetermined wireless communication standard and a control terminal capable of exchanging information data with the plurality of communication terminals via a wireless communication: characterized in that, when the control terminal receives the information data transmitted from each of the plurality of communication terminals, the control terminal identifies each of the communication terminals as a transmission source of the information data and transmits data receipt acknowledgement to each of the communication terminals; and each of the plurality of communication terminals repeatedly transmits the information data to the control terminal until receiving the data receipt acknowledgement and, after a predetermined duration passes from an initial transmission of the information data or after predetermined time comes, suspends transmission of the information data until a retransmission request is received from the control terminal. (Invention 1).

According to the invention above (Invention 1), retransmission of information data is repeated until a certain duration passes, and the retransmitting operation suspends after the certain duration passes until a retransmission request is received from the control terminal. Therefore, the number of communication terminals, which completed transmission of information data, increases smoothly in a time zone before many calls arise and concentrate, and data transmission from communication terminals are controlled in a time zone wherein many calls concentrate, so that interferences of radio waves can be prevented and communication of all information data can be completed efficiently in a short time.

Here, in the time zone before many calls arise and concentrate, many of the communication terminals are not ready to start data transmission, so that there are a small number of communication terminals which can transmit immediately even if trying to let them transmit information data from the start in response to a data transmission request from the control terminal, and the communication efficiency adversely declines. Therefore, data transmission is not particularly controlled in the time zone before many calls arise and concentrate, but by controlling data transmission from the communication terminals only in the time zone, wherein many calls concentrate, the communication efficiency can be improved.

In the invention above (Invention 1), preferably, the information data is converted to a code having a different bit length in the plurality of communication terminals and transmitted to the control terminal (Invention 2).

According to the invention above, by converting data to be transmitted to a code before transmitting, it becomes possible to attain data transmission having remarkably high strength against noise and interference caused by radio wave interferences.

In the inventions above (Inventions 1 and 2), preferably, after the predetermined duration passes or after the predetermined time comes, the control terminal transmits the retransmission request sequentially to communication terminals except for those, to which the data receipt acknowledgement has been already sent, among the plurality of communication terminals (Invention 3).

According to the invention above (Invention 3), although data transmission from the communication terminals is controlled after a certain duration passes, after that, in response to a retransmission request from the control terminal, transmission of information data to the control terminal is performed sequentially from the communication terminals, which has not completed the data transmission. Therefore, communication of all information data can be completed efficiently in a short time.

In the inventions above (Inventions 1 to 3), preferably, the predetermined duration or the predetermined time is transmitted from the control terminal to the plurality of communication terminals and stored in each of the plurality of communication terminals (Invention 4).

According to the invention above (Invention 4), it is possible to set optimal time for controlling data transmissions based on a prediction of a time zone, wherein many calls concentrate, in accordance with the number of communication terminals and a radio wave condition.

In the inventions above (Inventions 1 to 4), preferably, the predetermined wireless communication standard is IEEE 802.15.4 standard (Invention 5).

In the invention above (Inventions 1 to 5), preferably, the control terminal predicts the information data to be transmitted from the plurality of communication terminals and stores it as transmission prediction information, obtains correlation values of the transmission prediction information and the actually received information data, and determines the transmission prediction information having the highest correlation value as the information data actually received (Invention 6). In that case, preferably, the control terminal determines that received information data is not received correctly when the highest value of the correlation values is lower than a predetermined threshold (Invention 7).

According to the inventions above (6 and 7), even in the case where many transmissions of information data from the plurality of communication terminals to the control terminal coincide and interferences of data cause errors in transmission codes, the control terminal can correct the errors as if the control terminal received correct information data. Therefore, it is possible to receive information data from a plurality of communication terminals efficiently.

Secondary, the present invention provides a voting right counting system for shareholders meeting for counting the number of voting rights exercised by shareholders when voting for agendas in a shareholders meeting by using the communication method as set forth in any one of the inventions 1 to 7: wherein each of the plurality of communication terminals comprises a voting-right exercise data input means for a shareholder to input a content of voting right exercise as voting-right exercise data; the control terminal comprises shareholder information storage means for storing shareholder information including at least information on the number of shares or the number of voting rights each shareholder owns, and a voting right exercise result counting means for counting a result of voting right exercise by shareholders based on the voting-right exercise data and the number of voting rights owned by shareholders based on the information on the number of shares or the number of voting rights included in the shareholder information; and each of the plurality of communication terminals transmits as a part of the information data the voting-right exercise data input through the voting-right exercise data input means to the control terminal (Invention 8).

According to the invention above (Invention 8), in a shareholders meeting with a large number of attendees, even if results of exercise of voting rights are transmitted as voting-right exercise data from a plurality of communication terminals to a control terminal almost simultaneously, the situation that interferences of radio waves cause extremely long time for receiving the voting-right exercise data and a receive error are prevented. Therefore, results of exercise of voting rights by shareholders can be counted correctly without any counting mistake and in real time.

In the invention above (Invention 8), preferably, each of the plurality of communication terminals comprises an external memory device for storing agenda information which is specific to a shareholders meeting to be held (Invention 9).

The number of agendas and categories of the agendas, etc. to which the shareholders are asked to exercise their voting rights vary each time in respective shareholders meetings. According to the invention above (Invention 9), since information on agendas specific to a shareholders meeting to be held can be set in the external memory medium every time a shareholders meeting is held, the communication terminal can be a general-purpose device capable of supporting a variety of shareholders meetings. Note that the agenda information in the present application comprises an agenda number and an agenda category indicating whether the agenda is an ordinary agenda or an election agenda, etc. and includes all information relating to matters, to which shareholders exercise their voting rights in the shareholders meeting.

In the invention above (Invention 9), preferably, each of the plurality of communication terminals transmits the voting-right exercise data to the control terminal and also stores it in the external memory device (Invention 10).

According to the invention above (Invention 10), by cross-checking voting-right exercise data stored in the external memory device with voting-right exercise data transmitted from the communication terminals to the control terminal via a wireless communication, it is possible to easily check whether there is a counting mistake or not in a result of exercise of voting rights by shareholders which is counted in real time, or whether there is a falsification of data from outside or not.

In the invention above (Invention 10), preferably, each of the plurality of communication terminals comprises an IC card reader/writer part (Invention 11). In that case, it is preferable that the plurality of communication terminals transmits the voting-right exercise data to the control terminal and also writes it to an IC card via the IC card reader/writer part (Invention 12).

According to the inventions above (Inventions 11 and 12), by cross-checking the voting-right exercise data written in the IC card with the voting-right exercise data transmitted from a communication terminals to the control terminal via a wireless communication, it is possible to check easily whether there is a counting mistake or not in a result of exercise of voting rights by shareholders, which is counted in real time, or whether there is a falsification of data from outside or not.

In the invention above (Invention 9), preferably, the specific agenda information includes motion information, and the control terminal transmits a motion information call request to the plurality of communication terminals in the case where a motion and/or urgent motion is proposed in a shareholders meeting (Invention 13).

In shareholders meetings, there is a case where an agenda other than scheduled agendas is proposed as a motion from a shareholder, representative or board member, etc. at the meeting and exercise of voting rights of the shareholders becomes necessary. According to the invention above (Invention 13), when a motion and/or urgent motion is proposed in a shareholders meeting, motion information stored in the external memory device is called and shareholders can exercise their voting rights also for the motion via the communication terminals. Therefore, it is possible to count a result of exercise of voting rights by shareholders correctly without any counting mistake and in real time also for a motion and/or urgent motion. Note that the motion information in the present application comprises a motion number, a motion category indicating whether the motion is ordinary motion or an urgent motion, etc. and all information on the motion, to which shareholders exercise their voting rights in the shareholders meeting.

### EFFECTS OF THE INVENTION

According to the communication method in a wireless communication system of the present invention, even when data is transmitted from a large number of transmitting-side terminals to a receiving-side terminal via a wireless communication, all data can be received in a short time to complete the communication. Also, according to the voting right counting system for shareholders meeting of the present invention, it is possible to count a result of exercising voting rights by shareholders correctly in real time with no counting mistake.

### BRIEF DESCRIPTION OF DRAWINGS

[FIG. 1] A schematic configuration diagram showing a wireless communication system according to the first embodiment of the present invention.
[FIG. 2] A schematic view showing the configuration of a communication terminal according to the same first embodiment.
[FIG. 3] A schematic view showing the configuration of a control terminal according to the same first embodiment.
[FIG. 4] a schematic view showing the configuration of information data according to the same first embodiment.
[FIG. 5] A graph showing a relationship between a number of call generation in data communication and time.
[FIG. 6] A graph showing a relationship between a number of terminals, which completed data communication, and time.
[FIG. 7] A schematic configuration view showing a voting right counting system for shareholders meeting according to a second embodiment of the present invention.
[FIG. 8] A schematic view showing the configuration of a control terminal according to the same second embodiment.
[FIG. 9] A schematic view showing the configuration of a voting terminal according to the same second embodiment.

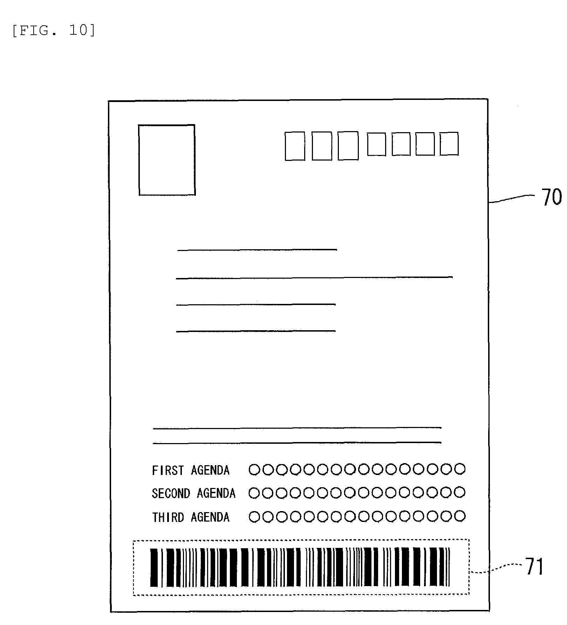

[FIG. 10] A schematic view showing an example of a voting form according to the same second embodiment.

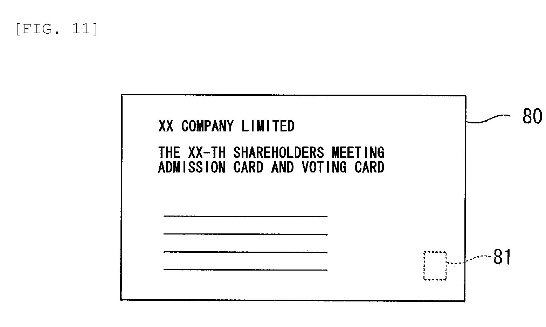

[FIG. 11] A schematic view showing an example of an IC card according to the same second embodiment.

### MODE(S) FOR CARRYING OUT THE INVENTION

Below, an explanation will be made on embodiments of the present invention based on the drawings.

### [First Embodiment]

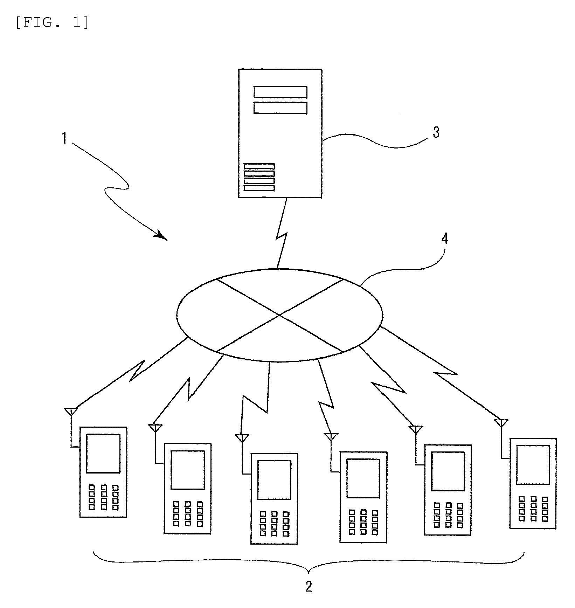

A first embodiment of the present invention will be explained first. The first embodiment of the present invention is about a communication method in a wireless communication system. A wireless communication system 1 according to the present embodiment is configured, as shown in FIG. 1, that a plurality of communication terminals 2 and a control terminal 3 are connected via a wireless communication network 4 and data can be transmitted and received each other.

The communication terminal 2 is configured by a control part (CPU) 200, transmit/receive part 201, antenna 211, code generation part 212, code reproduction part 213, timer value storage part 220, self-identification code storage part 230, transmitting information storage part 240 and control terminal identification code storage part 250. The timer value storage part 220, self-identification code storage part 230, transmission information storage part 240 and control terminal identification code storage part 250 are all connected to the control part 200, and it is configured to write data to each part and call data from each part by the control part 200.

The transmit/receive part 210 is connected to the antenna 211 for transmitting and receiving data by using radio waves. It is configured that the control part 200 and the transmit/receive part 210 are connected via the code generation part 212 and a code reproduction part 213 between them, and that a transmit/receive control signal can be transmitted from the control part 200 to the transmit/receive part 210 so as to control transmitting and receiving of data at the transmit/receive part 210.

The timer value storage part 220 is for storing a timer value for deciding a timing of suspending a retransmitting operation when transmitting data from the communication terminals 2 to the control terminal 3. The timer value is sometimes indicated as a relative time ΔT_{R} which is a duration from an initial transmission of data till suspension of the retransmission operation and is sometimes indicated as absolute time T_{R} with which the retransmission operation stops when reaching predetermined time. The timer value may be stored in a timer value storage part 220 in each communication terminal 2 in advance or may be transmitted as information from the control terminal 3 to each communication terminal 2 each time and stored in the timer value storage part 220.

The self-identification code storage part 230 is for storing a communication terminal identification code given to each of the plurality of communication terminals 2. The communication terminal identification code is used by the control terminal 3 to identify that data is transmitted from which terminal when transmitting data from the communication terminal 2 to the control terminal 3.

The transmitting information storage part 240 is for storing data to be transmitted from the communication terminal 2 to the control terminal 3. Also, the control terminal identification code storage part 250 is for storing a control terminal identification code assigned to the control terminal 3.

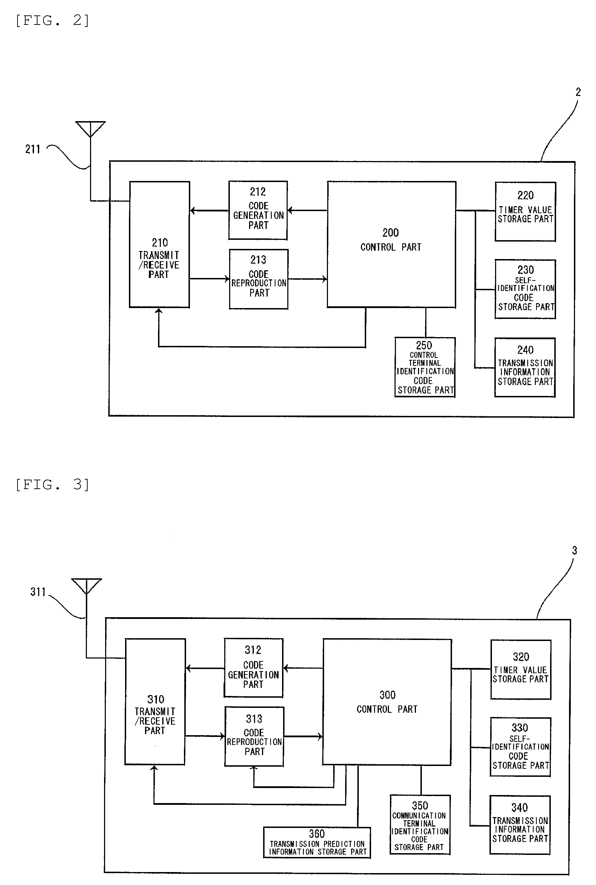

The control terminal 3 is, as shown in FIG. 3, configured by a control part (CPU) 300, transmit/receive part 310, antenna 311, code generation part 312, code reproduction part 313, timer value storage part 320, self-identification code storage part 330, transmitting information storage part 340, communication terminal identification code storage part 350 and transmission prediction information storage part 360. The timer value storage part 320, self-identification code storage part 330, transmission information storage part 340, communication terminal identification code storage part 350 and transmission prediction information storage part 360 are all connected to the control part 300, and it is configured that writing of data to each part and calling of data from each part are controlled by the control part 300.

The transmit/receive part 310 is connected to the antenna 311 for transmitting and receiving data via radio waves. The control part 300 and the transmit/receive part 310 are connected via the code generation part 312 and code reproduction part 313 between them, and it is configured that the control part 300 can transmit a transmit/receive control signal to the transmit/receive part 310 so as to control transmitting and receiving of data at the transmit/receive part 310.

The timer value storage part 320 is for storing the timer value explained above. In the present embodiment, the timer value is stored in the timer value storage part 320 in the control terminal 3, transmitted as information from the control terminal 3 to the communication terminals 2 and stored in the timer value storage part 220 in each of the plurality of communication terminals 2.

The self-identification code storage part 330 is for storing a control terminal identification code given to the control terminal 3. The control terminal identification code is used by each of the communication terminals 3 to determine whether data from the control terminal 3 to the communication terminals 3 is data transmitted from a correct terminal or not, for example, when transmitting data receipt acknowledgement and retransmission request, etc.

The transmission information storage part 340 is for storing data for transmitting from the communication terminals 3 to the control terminal 2.

The communication terminal identification code storage part 350 is for storing communication terminal identification codes assigned respectively to the plurality of communication terminals 2. For example, in a wireless communication system provided with 3000 of communication terminals 2 and one control terminal 3, communication terminal identification codes of all of the 3000 communication terminals 2 are stored in the communication terminal identification code storage part 350 of the control terminal 3.

The transmission prediction information storage part 360 is for storing a data series necessary for predicting in the control part 300 information to be transmitted from the communication terminals 2 to the control terminal 3.

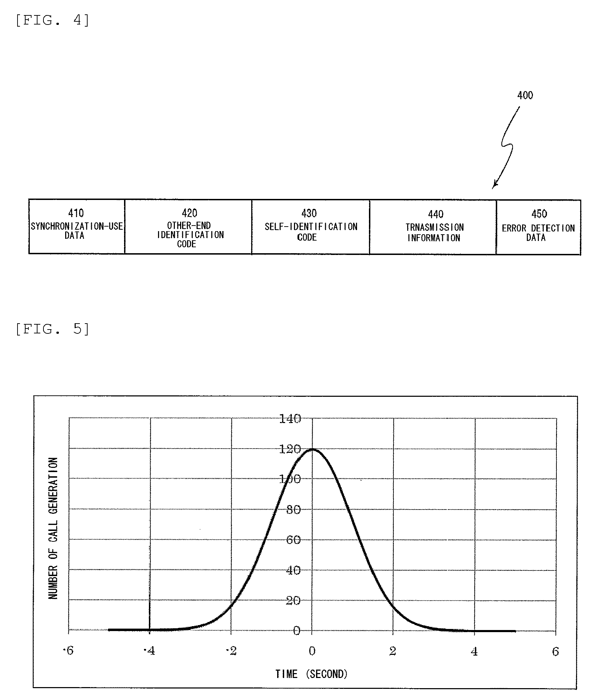

In the present embodiment, for example, data shown in FIG. 4 may be mentioned as information data 400 to be transmitted and received via the wireless communication network 4. The information data 400 includes synchronization-use data 410, other-end identification code 420, self-identification code 430, transmission information 440 and error detection data 450.

The synchronization-use data 410 is used for indicating timing synchronization of data bits and a start point of data. As the other-end identification code 420, a control terminal identification code is used when information data 400 is transmitted from communication terminals 2 to the control terminal 3 and a communication terminal identification code is used when information data 400 is transmitted from the control terminal 3 to communication terminals 2. As the self-identification code 430, a communication terminal identification code is used when information data 400 is transmitted from communication terminals 2 to the control terminal 3 and a control terminal identification code is used when information data 400 is transmitted from the control terminal 3 to communication terminals 2. Transmission information 440 is data to be transmitted and, for example, in a system using a plurality of voting terminals for voting or exercising voting rights in a meeting or in a shareholder meeting, etc. and a control terminal for counting the voting results or results of exercising voting rights, the voting data and the voting-right exercise data are the transmission information 440. A CRC (cyclic redundancy code) is generally used for the error detection data 450, and it is for checking whether there is any error in the information data 400 when receiving the information data 400.

Transmitting and receiving of data in the present embodiment is performed as below. When taking an example of transmitting data from a communication terminal 2 to the control terminal 3, first, in the communication terminal 2, information data 400 as a transmission object is transmitted from a control part 200 to the code generation part 212. In the code generation part 212, 32-bit code is assigned to 4 bits of transmission data as shown in Table 1. Namely, this corresponds to spread spectrum coding of assigning 8-bit code to one bit in the code generation part 212.

**[Table 1]**

| Transmission Data | Transmission Codes |
|---|---|
| 0 0 0 0 | 1 1 0 1 1 0 0 1 1 1 0 0 0 0 1 1 0 1 0 1 0 0 1 0 0 0 1 0 1 1 1 0 |
| 1 0 0 0 | 1 1 1 0 1 1 0 1 1 0 0 1 1 1 0 0 0 0 1 1 0 1 0 1 0 0 1 0 0 0 1 0 |
| 0 1 0 0 | 0 0 1 0 1 1 1 0 1 1 0 1 1 0 0 1 1 1 0 0 0 0 1 1 0 1 0 1 0 0 1 0 |
| 1 1 0 0 | 0 0 1 0 0 0 1 0 1 1 1 0 1 1 0 1 1 0 0 1 1 1 0 0 0 0 1 1 0 1 0 1 |
| 0 0 1 0 | 0 1 0 1 0 0 1 0 0 0 1 0 1 1 1 0 1 1 0 1 1 0 0 1 1 1 0 0 0 0 1 1 |
| 1 0 1 0 | 0 0 1 1 0 1 0 1 0 0 1 0 0 0 1 0 1 1 1 0 1 1 0 1 1 0 0 1 1 1 0 0 |
| 0 1 1 0 | 1 1 0 0 0 0 1 1 0 1 0 1 0 0 1 0 0 0 1 0 1 1 1 0 1 1 0 1 1 0 0 1 |
| 1 1 1 0 | 1 0 0 1 1 1 0 0 0 0 1 1 0 1 0 1 0 0 1 0 0 0 1 0 1 1 1 0 1 1 0 1 |
| 0 0 0 1 | 1 0 0 0 1 1 0 0 1 0 0 1 0 1 1 0 0 0 0 0 0 1 1 1 0 1 1 1 1 0 1 1 |
| 1 0 0 1 | 1 0 1 1 1 0 0 0 1 1 0 0 1 0 0 1 0 1 1 0 0 0 0 0 0 1 1 1 0 1 1 1 |
| 0 1 0 1 | 0 1 1 1 1 0 1 1 1 0 0 0 1 1 0 0 1 0 0 1 0 1 1 0 0 0 0 0 0 1 1 1 |
| 1 1 0 1 | 0 1 1 1 0 1 1 1 1 0 1 1 1 0 0 0 1 1 0 0 1 0 0 1 0 1 1 0 0 0 0 0 |
| 0 0 1 1 | 0 0 0 0 0 1 1 1 0 1 1 1 1 0 1 1 1 0 0 0 1 1 0 0 1 0 0 1 0 1 1 0 |
| 1 0 1 1 | 0 1 1 0 0 0 0 0 0 1 1 1 0 1 1 1 1 0 1 1 1 0 0 0 1 1 0 0 1 0 0 1 |
| 0 1 1 1 | 1 0 0 1 0 1 1 0 0 0 0 0 0 1 1 1 0 1 1 1 1 0 1 1 1 0 0 0 1 1 0 0 |
| 1 1 1 1 | 1 1 0 0 1 0 0 1 0 1 1 0 0 0 0 0 0 1 1 1 0 1 1 1 1 0 1 1 1 0 0 0 |

Coded information data 400 is transmitted by the transmit/receive part 210 of the communication terminal 2 via the antenna 211 and received at the transmit/receive part 310 via the antenna 311 of the control terminal 3 as the receiving side. On the control terminal 3 side, a reverse operation of the coding explained above is performed. Namely, in the code reproduction part 313 of the control terminal 3, conversion to corresponding 4-bit received data is performed on a received waveform or on every 32 bits of receipt code output from the transmit/receive circuit 310 so as to reproduce information data 400. Also, in the case of transmitting data from the control terminal to the communication terminal 2, code generation is performed on the control terminal 3 side and code reproduction is performed on the communication terminal 2 side.

Note that a transmission code is transmitted after modulating it by separating every other bit to I (same-phase component) and Q (orthogonal component) alternatively by using an orthogonal modulator. At this time, the Q component is delayed exactly by 1/2 of a bit cycle, and subjected to so-called offset QPSK modulation. Due to such modulation, transmission data is transferred in a direct sequence spread spectrum method with a spreading ratio of 8. By transferring by the spread spectrum method in this way, strength against noise and interference increases.

Subsequently, an explanation will be made on a communication method in the wireless communication system according to the present embodiment. For example, in a system for voting by using a plurality of communication terminals 2 in a meeting, etc. and counting a voting result thereof in one control terminal 3, generation of a call (traffic) of data communication as to voting data corresponding to information data 400 is assumed to be in a gauss distribution having its center at a certain point as shown in FIG. 5. The certain point is a point of asking to vote in the meeting.

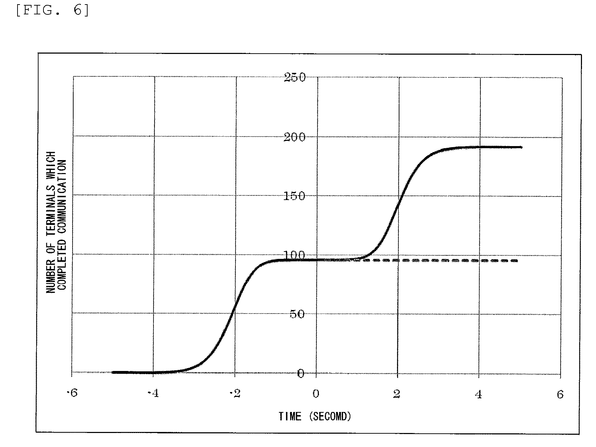

FIG. 5 is based on a calculation example of the number of call generation per 0.1 second when assuming that there are 3000 communication terminals and standard deviation δ of generation probability is 1 second, wherein the axis of abscissa is time and the axis of ordinate is the number of call generation. Here, when assuming that communication time related to call generation is 10ms, a relationship between the number of communication terminals 2 which completed data communication without any error caused by interferences (number of terminals which completed communication) and time becomes as shown in FIG. 6.

In FIG. 6, the solid line indicates the number of terminals, which completed communication, when retransmission of data is not made even if a data receipt acknowledgement is not returned from the control terminal 3 after transmitting voting data, and a dotted line indicates the number of terminals, which completed communication, when retransmission of data is made repeatedly if a data receipt acknowledgement is not returned after transmitting voting data. The number of terminals which completed communication increases at the beginning as the number of call generation increases, but it does not increase at all due to arising of interferences of radio waves after that. When retransmission of data is not made (namely, the case indicated with the solid line), arising of interferences of radio waves decreases as the number of call generation decreases and the number of terminals completed communication increases again, however, communication terminals 2 which transmitted data once do not retransmit data, so that the number of terminals completed communication saturates at a bit less than 200. On the other hand, when carrying out retransmission of data repeatedly (that is, the case indicated by the dotted line), the number of terminals completed communication saturates at a bit less than 100 at the early stage and interferences of radio waves keep arising due to the repeatedly made retransmission of data after that, therefore, the number of terminals completed communication does not increase at all even if the number of call generation decreases. In this way, when the number of communication terminals 2 increases, most of the data communication end up not being completed and failing.

In the wireless communication system according to the present embodiment, when transmitting information data 400 from communication terminals 2 to the control terminal 3, information data 400 is transmitted repeatedly to the control terminal 3 until data receipt acknowledgement from the control terminal 3 is received from the initial transmission of the information data 400 till a predetermined time passes or until a predetermined time comes, however, transmission of the information data 400 stops after the predetermined tine passes or coming to the predetermined time after transmitting the information 400 at the beginning. After that, when a retransmission request is transmitted from the control terminal 3 to the communication terminal 2, the information data 400 is transmitted again. By adopting such a communication method, the number of communication terminals completed transmitting information data increases smoothly in a time zone before many calls are generated to be concentrated, transmission of data from communication terminals is controlled in a time zone, wherein many calls concentrate, so that interferences of radio waves can be prevented, and communication of all information data can be completed efficiently in a short time.

As shown in FIG. 6, the number of terminals, which completed communication, increases smoothly before the time that many calls concentrate. Inversely, in the time zone before many calls are generated and concentrated, since there are many communication terminals 2 not ready for starting data transmissions, when trying to let communication terminals 2 transmit information data in response to a data transmission request from the control terminal 3 from the beginning, there are a small number of communication terminals 2 which can transmit immediately, and the communication efficiency is declined adversely. Therefore, the communication efficiency can be improved by not particularly controlling data transmission in the time zone before lots of calls are generated and concentrated and start controlling data transmission from the communication terminals 2 when the time zone, wherein lots of calls concentrate, comes. Here, the time wherein lots of calls concentrate is a time before the center of a distribution of call generation exactly by standard deviation δ, so that it is preferable to control the data transmission after that time.

In the present embodiment, the predetermined duration or the predetermined time explained above is stored as a timer value in a timer value storage part 220 of the communication terminals 2. If the timer value is stored as a relative time ΔT_{R}, the relative time ΔT_{R} is the predetermined duration. Namely, when the timer value is one minute, the communication terminals keep on transmitting information data 400 to the control terminal 3 unless a data receipt acknowledgement is received from the control terminal 3 until one minute passes from the first transmission of the information data. When one minute passes from the first transmission of the information data 400, the communication terminals 2 suspend the transmission operation and wait for a retransmission request to be sent from the control terminal 3. Alternatively, when the timer value is stored as an absolute time T_{R}, the absolute time T_{R} is the predetermined time. Namely, if the timer value is 13:35, the communication terminals 2 keep on transmitting information data 400 to the control terminal 3 until 13:35 unless data receipt acknowledgement is received from the control terminal 3. When 13:35 comes, the communication terminals 2 suspend the transmission operation and wait for a retransmission request to be sent from the control terminal 3. In the case where it is predictable that T_{R} is time when many calls concentrate, it becomes possible to perform effective data communication by preventing time when many calls concentrate by setting an absolute time T_{R} as the timer value.

Since voting contents and the number of communication terminals 2 in meetings, etc. vary and a time zone wherein many calls concentrate varies in accordance with a radio wave condition, it is preferable that an optimal value can be set as the timer value each time. Therefore, in the present embodiment, the time value us stored in the timer value storage part 320 in the control terminal 3, and the timer value is transmitted from the control terminal 3 to the communication terminals 2 and stored in respective timer value storage parts 220 in the communication terminals 2. As a result, time for controlling the data transmission can be set optimally in accordance with a situation at that time.

In the control terminal 3, the communication terminals identification code storage part 350 stores communication terminal identification codes of all communication terminals 2. Since information data 400 to be sent from each communication terminal includes a communication terminal identification code as a self-identification code 430, the control terminal 3 can identify the communication terminal 2 as a transmitting source easily and from which terminal the information data 400 is sent. The control terminal 3, which received the data correctly, sends data receipt acknowledgement to the identified communication terminal 2 as a transmitting source.

After that, the control terminal 3 excludes communication terminal identification codes of terminals, to which data receipt acknowledgement has been already sent, from communication terminal identification codes stored in the communication terminal identification code storage part 350 and transmits a retransmission request to communication terminals 2, from which information data 400 has not been received. As a result, the control terminal 3 requests data retransmission only to the communication terminals 2, which have not completed data transmission, and information data is transmitted successively from the communication terminals 2 to the control terminal, so that communication of all information data can be completed efficiently in a short time.

When the number of the communication terminals 2 is extremely large, such as 3000, it is assumed that many transmissions of information data 400 from the plurality of communication terminals 2 to the control terminal 3 coincide and interferences of data cause errors in transmission codes. Even in such a case, for the control terminal 3 to receive information data 400 efficiently, a mechanism of correcting errors as if the control terminal 3 received correct information data is adopted in the present embodiment.

For example, when considering the case where information data 400 to be transmitted by communication terminals 2 to the control terminal 3 is a voting data in a meeting, the information transmitted from the communication terminals 2 is a very simple information, such as "yea" and "nay". By assigning codes to information to be transmitted, the information data 400 transmitted from the communication terminals 2 to the control terminal 3 may be broken down into patterns. For example, a code indicating "yea" may be "10011111" and code for "nay" may be "01100000". Also, when a communication terminal identification code of a communication terminal 2 is "0000000000000001" and a control terminal identification code of the control terminal 3 is "0000000000000000", the information data 400 becomes as shown in Table 2.

**[Table 2]**

| Information Transmitted from Communication terminal | Information Data 400 | | | | |
|---|---|---|---|---|---|
| | 410 | 420 | 430 | 440 | 450 |
| Yea | Synchronization Data | 0000000000000000 | 0000000000000001 | 10011111 | CRC |
| Nay | Synchronization Data | 0000000000000000 | 0000000000000001 | 01100000 | CRC |

When information transmitted from the communication terminal 2 is "yea", the information data 400 would be composed of synchronization-use data 410, "0000000000000000" as an other-end terminal identification code 420, "0000000000000001" as a self-identification code 430, "10011111" as transmission information 440 and error detection data 450 (CRC). When information transmitted from the communication terminal 2 is "nay", the information data 400 would be composed of synchronization-use data 410, "0000000000000000" as the other terminal identification code 420, "0000000000000001" as a self-identification code 430, "01100000" as transmission information 440 and error detection data 450 (CRC).

When transmitting information data 400 from the communication terminal 2 to the control terminal 3, even if an error arises in the transmission information 440 due to some reason, such as interferences of radio waves, in the control terminal 3 of the present embodiment, information to be transmitted from the communication terminal 2 to the control terminal 3 is predicted as "yea" and "nay" above, a correlation value is obtained between transmission prediction information obtained by calculation based on the prediction and actually received information data 400, and transmission prediction information with the highest correlation value is decided to be an actually received information data 400. In fact, since the information data 400 to be transmitted is made to be a spread code in the code generation part 212, by using a mechanism of correlation detection by using a long code, which can be obtained from a transmission data bit length × a spreading ratio, it is possible to attain data transmission having remarkably high strength against noise and interference jam.

Specifically, two data series shown in Table 2 are stored in the transmission prediction information storage part 360 of the control terminal 3, and a code of transmission prediction information made to be a spread code obtained by performing spread spectrum on the data series (a long code obtained from a transmission data bit length × a spreading ratio explained above) is obtained by calculation in the control part 300. The code of transmission prediction information is supplied to the code reproduction part 313, where correlation values between the coded transmission prediction information and actually received information data 400 are obtained and the result is output to the control part 300. The control part 300 can decide that transmission prediction information with the highest correlation value as actually received information data 400. A gain from the correlation detection as above becomes 'n' times when a bit number for correlation detection is 'n'. Therefore, a target signal level at receiving becomes a widely high level than interference waves even if there is an interference caused by radio wave interferences.

Here, when the highest correlation value is lower than a predetermined threshold, there is a possibility that received information data 400 is error detection due to noise or interference, so that the control part 300 decides that the information data 400 is not received correctly.

As explained above, by using the mechanism that the control terminal 3 can correct errors as if correct information data is received, even in the case where many transmissions of information data 400 from a plurality of communication terminals 2 to the control terminal 3 coincide and interferences of data cause errors in transmitted information, because the control terminal 3 can correct errors as if correct information data 400 is received, information data 400 from a plurality of communication terminals 2 can be received efficiently.

According to the communication method in the wireless communication system as explained above, even in the case where data is transmitted from a large number of transmitting-side terminals to a receiving-side terminal via a wireless communication, all data can be received in a short time to complete the communication.

### [Second Embodiment]

Subsequently, a second embodiment of the present invention will be explained. The second embodiment of the present invention is regarding a voting right counting system for shareholders meeting.

A shareholder meeting is a highest body for decision making in company limited and shareholders can exercise their voting rights in accordance with number of shares they own, one voting right per one share basically, in the shareholder meeting. In the case of a company limited wherein a unit share system is adopted, shareholders have one voting right per one unit. In any case, the number of voting rights shareholders have is determined in accordance with the number of shares the shareholders own.

In principle, the voting rights are exercised by attending shareholders meetings, however, under certain circumstances, it may be done in writing or electromagnetic record. Therefore, sometimes shareholders do not attend the shareholders meeting but exercise the voting rights by writing yea or nay to respective agendas in a voting form mailed in advance to each shareholder and sending the voting form back to a transfer agent, etc. or exercise the voting right by Internet voting in advance. In such cases, the number of voting rights exercised in advance by shareholders not attending the shareholders meeting and the number of voting rights exercised by shareholders attended the shareholders meeting on the date at the meeting venue are combined to resolve approval or not approval for each agenda.

In shareholders meetings of Japanese companies, proxies were collected in advance from cross-shareholding companies and agendas were resolved by majority votes without any substantive arguments, that is, so-called "swift and fixed meetings" had been in practice for many years. Exercise of voting rights by shareholders attending the shareholders meeting was nothing more than expressing their wills by clapping or raising hands, etc. for each agenda and a chairperson confirmed it through eyes and ears because the movements were already fixed in advance. However, in recent years, since there has been development in eliminating cross-shareholding, there has been increased opportunities of exercising voting rights by own decisions of new major shareholders, such as foreign shareholders and pension funds, awareness of exercise of voting rights became high among individual shareholders and the company side has also started to seriously regard shareholders, the need to confirm the numbers of votes of yeas and nays has been growing to decide approval of each agenda. Also, there are demands for improving reliability of shareholders meetings at the social level and there is even a movement of drawing up a set of rules at securities exchanges to disclose not only the results of exercising voting rights but also the numbers of votes of yeas and nays.

It is necessary to count the voting result of exercising voting rights of shareholders speedy on the spot to find out the numbers of votes of yeas and nays correctly and to decide an approval during the shareholders meeting. However, since the number of voting rights owned by each of the attending shareholders varies, much time and resources are necessary for counting exercising of voting rights on the spot at the shareholders meeting. In recent years, a system for counting voting-right exercise in real time by connecting a wireless LAN, IC cards and voting terminals has been developed. However, when the number of voting terminals increases in a large-scale shareholders meeting, interferences of radio waves arise in wireless communication, which results in problems, such that transmission of all data never complete or it takes extremely long time to complete even if all data is transmitted. Furthermore, because transmitting and receiving of data are made in a wireless communication, it is hard to completely get rid of a concern about falsification of data from outside.

In the voting right counting system for shareholders meetings according to the second embodiment of the present invention, in a shareholders meeting with a large number of attendees, even if results of voting-right exercise are transmitted as voting-right exercise data from a plurality of communication terminals to a control terminal almost simultaneously, the situation that interferences of radio waves cause extremely long time for receiving the voting-right exercise data or a receive error is prevented. Therefore, results of voting-right exercise by shareholders can be counted correctly without any counting mistake and in real time.

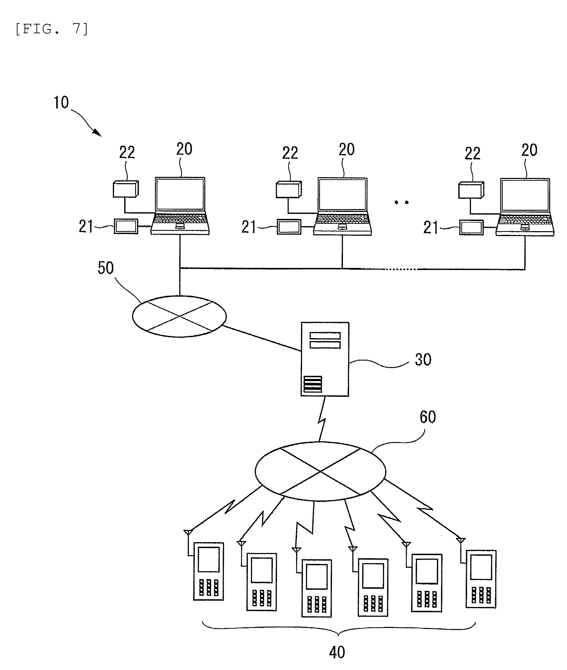

As shown in FIG. 7, the counting system for voting rights in shareholders meeting 10 according to the present embodiment comprises a plurality of reception terminals 20, a control terminal 30 and a plurality of voting terminals 40. The plurality of reception terminals 20 and the control terminal 30 are connected for mutual communication via a network line 50, such as a LAN, and the control terminal 30 and the plurality of voting terminals 40 are connected to be able to transmit and receive data mutually via a wireless communication network based on IEEE 802.15.4 standard.

One or more reception terminals 20 are provided at the front desk of a venue of a shareholders meeting. Each of the reception terminals 20 is connected to a barcode information scanner 21 and a reader/writer 22 for reading and writing information on IC cards. In FIG. 7, three reception terminals 20 are provided, but the number is not limited to this and may be increased or decreased in accordance with the expected number of shareholders to be in the shareholders meeting.

The barcode information scanner 21 is used for reading a barcode 71 on a voting form 70 sent by mail to each shareholder. The barcode 71 is a shareholder number being unique to each shareholder, to whom each voting form 70 is sent, made into a barcode. Shareholders who wish to attend the shareholders meeting register at the front desk with their voting forms 70 on the day of the meeting, the barcode information scanner 21 reads the barcodes 71, and the reception terminal 20 obtains shareholders' numbers, each of which is unique to each shareholder, so that shareholders can be identified.

Note that instead of connecting the barcode information scanner 21 to the reception terminal 20, for example, two-dimensional code, which is a shareholder's number assigned to each shareholder made into a two-dimensional code, may be put on the voting form 70 and a two-dimensional code information scanner may be connected to the reception terminal 20. Alternatively, an IC chip storing a shareholder's number assigned to each shareholder may be buried in the voting form 70 and a scanner for reading information from the IC chip may be connected to the reception terminal 20. Furthermore, other information than the shareholder's number may be used to identify shareholders.

The control terminal 30 is provided at a predetermined place in the shareholders meeting venue. In the present embodiment, the control terminal 30 is an independent one terminal, but it is not limited to that and, for example, one of the reception terminals 20 may also serve as a control terminal. Also, a plurality of control terminals 30 may be provided.

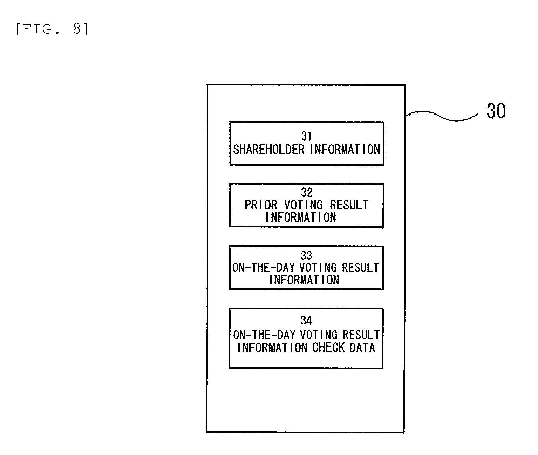

The control terminal 30 stores shareholder information 31 and prior voting result information 32 as shown in FIG. 8. The shareholder information 31 includes name, address, telephone number, the number of owned shares and the number of voting rights of the shareholder, etc. besides the shareholder's number. The prior voting result information 32 is a counting result of voting-right exercise by shareholders not attending the shareholders meeting prior to the meeting by sending the voting forms 70 or by voting through the Internet, and the numbers of voting rights of yeas and nays are recorded for each agenda.

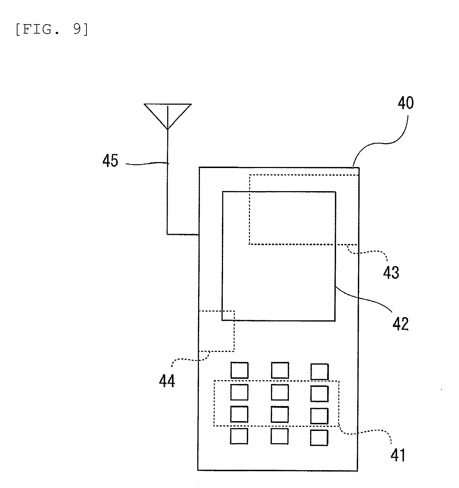

The voting terminals 40 are fixed to seats in the shareholders meeting venue. The voting terminal 40 comprises, as shown in FIG. 9, a control part 41, a touch-panel type data input part 42, an IC card reader/writer part 43, to which an IC card 80 can be set, an external storage part 44, wherein an external memory medium can be set, and a transmit/receive part 45 for transmitting and receiving data.

At the front desk of the shareholders meeting, IC cards 80 are prepared, which function as admission card and voting card, and handed to respective shareholders. The IC card 80 stores a unique admission ID 81. The IC card 80 is used as an admission card for identifying shareholder when the shareholder enters or leaves the venue in the middle and is used as a voting card to be set to the IC reader/writer part 43 of the voting terminal 40 to activate the voting terminal 40 and to write voting-right exercise data input by the shareholder through the data input part 42 of the voting terminal 40. As explained above, as a result that voting-right exercise data is written in the IC card 80, the voting-right exercise data written in the IC card 80 can be cross-checked with voting-right exercise data transmitted from the voting terminal 40 to the control terminal 30 via the wireless communication network 60, and a result of voting-right exercise by shareholders counted in real time can be checked easily on whether there is any counting mistake or not or whether there is any falsification of data made from outside or not.

In the external storage part 44 of the voting terminal 40, an external memory medium is set in advance. The external memory medium stores information on agendas to be voted on the day. The number of agendas and categories of the agendas, etc., to which the shareholders are asked to exercise voting rights, vary every time in respective shareholders meetings. Accordingly, by setting information on agendas peculiar to a shareholders meeting to be held in the external storage part 44 via the external memory medium every time a shareholders meeting is held, the voting terminal 40 can be a general-purpose device capable of supporting a variety of shareholders meetings. Furthermore, if it is configured that the information on agendas stored in the external memory medium can be indicated in some languages other than Japanese, such as English and French, it is also possible to support foreign shareholders easily. Note that as the information on agendas, an agenda number and an agenda category indicating whether the agenda is an ordinary agenda or an election agenda, etc. may be considered but it is not limited to those and may be any information on matters, to which shareholders exercise their voting rights in the shareholders meeting.

The external memory medium also stores information on motions so as to respond to the case where a motion and/or an urgent motion is proposed in the shareholders meeting on the day. In shareholders meetings, there is a case where an agenda other than scheduled agendas is proposed as a motion from a shareholder, representative or board member, etc. at the meeting and exercise of voting rights of the shareholders becomes necessary. Accordingly, by storing motion information in the external memory medium in this way, when a motion and/or urgent motion is proposed, the control terminal 30 transmits a motion information call request to the voting terminals 40, the motion information is read from the external memory medium by the control part 41 of the voting terminal, and shareholders can exercise their voting rights also on the motion through the communication terminals. As the motion information, a motion number thereof and a motion category indicating whether the motion is an ordinary motion or an urgent motion, etc. may be considered but it is not limited to those and may be any information on the motion, to which shareholders exercise their voting rights in the shareholders meeting.

Furthermore, in the present embodiment, voting-right exercise data input by the shareholders through the data input part 42 of the voting terminal 40 is written in the external memory medium set in the external storage part 44. Thereby, the voting-right exercise data stored in the external memory medium is cross-checked with voting-right exercise data transmitted from the voting terminals 40 to the control terminal 30 via the wireless communication network 60, so that it is easy to check if there is any counting mistake or not in a result of voting-right exercise by the shareholders counted in real time and if there is any falsification of data from the outside or not.

To count a result of voting-right exercise by the shareholders by using the voting right counting system for shareholders meetings 10 as above, first, each of the shareholders who wish to attend the shareholders meeting brings a voting form 70 sent by mail in advance to a venue of the shareholders meeting and shows it at the front desk, so that each shareholder is identified at the front desk. Specifically, the barcode information scanner 21 connected to the reception terminal 20 is used to read a barcode 71 on the voting form 70 carried by shareholders, so that the reception terminal 20 obtains a shareholder's number thereof.

Subsequently, the reception terminal 20 accesses the control terminal 30 to seek shareholder information 31 of the shareholder by using the shareholder's number as a key and obtains it. Identification of the shareholder is performed based on the shareholder information 31.

After the identifying, an operation of linking the shareholder information 31 to an IC card 80 is conducted. Specifically, by holding the IC card 80 over the reader/writer 22, an admission ID 81 stored in the IC card 80 is registered to the shareholder information 31 of the shareholder through the reception terminal 20 and a shareholder's number of the shareholder is written in the IC card 80. After finishing the linking operation, the IC card 80 is given to the shareholder.

In the case where a shareholder, who has exercised his/her voting right in advance by sending back his/her voting form 70 or by Internet voting, shows up at the meeting, after identifying the shareholder at the front desk, double exercise of the voting rights is prevented by performing a processing of subtracting a voting-right exercise result of the shareholder from the prior voting result information 32. After the processing, the IC card 80 is also given to the shareholder, and the shareholder can exercise his/her voting right afresh on the day of the shareholders meeting in the same way as other shareholders.

Each of the shareholders sits at a seating position like a seat, etc. arranged in the venue and sets the IC card 80 to the IC reader/writer part of the voting terminal 40 provided to the seat. Thereby, the voting terminal 40 is activated to be in a state ready for voting. However, when operating the data input part 42 at this point, the voting terminal 40 does not operate. Without a trigger like an awake signal from the control terminal 30, voting-right exercise data cannot be input or transmitted as a practical matter.

Exercise of voting rights by shareholders is done by an instruction by a chairperson. At voting of an agenda, on an instruction by the chairperson, the control terminal 30 transmits an agenda number for voting to the voting terminals 40, each of the voting terminals 40 calls agenda information from the external storage part 44 by using the agenda number as a key and displays a voting screen on a touch panel of the data input part 42. Only after coming to this state, the respective shareholders can input and transmit voting-right exercise data by using the voting terminals 40.

When exercising voting rights, a shareholder touches a pro-or-con item on the touch panel of the data input part 42. The pro-or-con item is one of "yea", "nay" and "abstention". When the shareholder inputs pro or con from the data input part 42, voting-right exercise data is generated in the control part 41 and the voting-right exercise data is transmitted from the transmit/receive part 45 to the control terminal 30. At this time, the voting-right exercise data is also written in the IC card 80 and in the external memory medium. The shareholders will continue exercising their voting rights until final agenda in this way.

When a motion and/or urgent motion is proposed, the control terminal 30 transmits a motion information call request including a motion number to the voting terminals 40, the control 41 of the voting terminal 40 calls motion information from the external memory medium by using the motion number as a key in each of the voting terminals 40, motion information is called from the external storage part 44 and a voting screen is displayed on the touch panel of the data input part 42. After that, voting rights are exercised in the same way as in ordinary agendas.

In the voting right counting system for shareholders meetings 10 according to the present embodiment, data communication between the control terminal 30 and the voting terminals 40 is performed by using the communication method explained in the first embodiment. Thereby, even when voting-right exercise data is transmitted from a large number of voting terminals 40 to the control terminal 30 via a wireless communication, all data can be received and the communication is completed in a short time.

A counting operation of the voting-right exercise data is performed in the control terminal 30 for each shareholder based on the voting-right exercise data transmitted form his/her voting terminal and the number of voting rights owned by the shareholder based on information on the number of shares or information on the number of voting rights included in the shareholder information 31. Specifically, the voting-right exercise data transmitted from the voting terminal 40, which is a result of exercising the voting rights on each agenda, is added with the number of voting rights owned by the shareholder so as to generate on-the-day voting result information 33 recording the numbers of voting rights of yeas and nays for each agenda in the control terminal 30.

After generating the on-the-day voting result information 33, prior voting result information 32 and the on-the-day voting result information 33 stored in the control terminal 30 are summed up to count the numbers of voting rights of yeas and nays for each agenda. In this way, results of exercise of voting rights by shareholders can be counted correctly without any counting mistake and in real time. The counting results may be, for example, displayed on one or more large displays provided in the shareholders meeting venue and can be stored as final results of voting-right exercise.

Also, as explained above, voting-right exercise data is stored in the IC card 80 and the external memory medium. Therefore, it is possible to check whether or not the on-the-day voting result information 33 based on the voting-right exercise data transmitted from the voting terminals 40 to the control terminal 30 is affected by falsification from outside in the process of the wireless communication. Specifically, after collecting the IC cards 80 and eternal memory media from the respective voting terminals 40, in the control terminal 30, voting-right exercise data and shareholders' number stored in the IC cards 80 and the external memory media are used to separately create on-the-day voting result information check data 34. Next, by comparing and examining the on-the-day voting result information 33 with the on-the-day voting result information check data 34, it is possible to check if there is any falsification of data from outside in the process of wireless communication.

In the voting right counting system for shareholders meeting 10 according to the present embodiment, a wireless communication is performed between the control terminal 30 and the voting terminals 40 via a wireless communication network 60 based on IEEE 802.15.4 standard. The IEEE 802.15.4 standard features wireless communications by using a weak radio wave and is suitable for a short distance wireless communication originally. Accordingly, terminal connections is not possible from a wide area and only the voting terminals 40 inside the venue of shareholders meeting can perform wireless communication to the control terminal 30. Therefore, the adaptation of the IEEE 802.15.4 standard leads to a reduction of a risk of falsification of data from outside.

According to the voting right counting system for shareholders meetings as explained above, in a shareholders meeting with a lot of attendees, even if a result of voting-right exercise is transmitted as voting-right exercise data from a plurality of communication terminals to the control terminal almost at the same time, situations, such that receiving of the voting-right exercise data takes extremely long time or a receive error arises, caused by interferences of radio waves are prevented, and it is possible to count a result of voting-right exercise by shareholders correctly without any counting mistake and in real time.

The embodiments explained above are described to facilitate understanding of the present invention and are not to limit the present invention. Accordingly, respective elements disclosed in the above embodiments include all design modifications and equivalents belonging to the technical scope of the present invention.

For example, instead of providing an information reading means, such as a barcode information scanner 21, to the reception terminal 20, a content of the voting form 70 brought by a shareholder may be checked at the front desk and shareholder information 31 may be read manually from the control terminal 30 to identify the shareholder.

Also, instead of fixing the voting terminal 40 to each seat in the venue of shareholders meeting, it may be handed out at the front desk. When fixing the voting terminal 40 to a seat, a system capable of checking which seats are taken by special shareholders on the control terminal side may be also adopted. Thereby, as well as checking seats of special shareholders, it is possible to observe their voting behaviors particularly, so that the shareholders meeting can be conducted smoothly.

### [Industrial Applicability]

A communication method according to the wireless communication system according to the present invention is useful for completing data transmission/reception by using radio in a short time in an area with a large number of people. Also, the voting right counting system for shareholders meetings according to the present invention is useful for conducting counting of the number of voting rights exercised by shareholders swiftly and correctly at voting for agendas in shareholders meetings.

### [Explanation of Reference Numbers]

1... wireless communication system
2... communication terminal
   200... control part
   210... transmit/receive part
   211... antenna
   212... code generation part
   213... code reproduction part
   220... timer value storage part
   230... self-identification code storage part
   240... transmission information storage part
   250... control terminal identification code storage part
3... control terminal
   300... control part
   310... transmit/receive part
   311... antenna
   312... code generation part
   313... code reproduction part
   320... timer value storage part
   330... self-identification code storage part
   340... transmission information storage part
   350... communication terminal identification code storage part
   360... transmission prediction information storage part
4... wireless communication network
   400... information data
   410... synchronization-use data
   420... other-end identification code
   430... self-identification code
   440... transmission information
   450... error detection data
10... voting right counting system for shareholders meeting
20... reception terminal
   21... barcode information scanner
   22... reader/writer
30... control terminal
   31... shareholder information
   32... prior voting result information
   33... on-the-day voting result information
   34... on-the-day voting result information check data
40... voting terminals
   41... control part
   42... data input part
   43... IC reader/writer
   44... external storing part
   45... transmit/receive part
50... network line
60... wireless communication network
70... voting form
   71... barcode
80... IC card
   81... admission ID

## Claims

1. A communication method in a wireless communication system, comprising a plurality of communication terminals having a wireless communication function based on a predetermined wireless communication standard and a control terminal capable of exchanging information data with the plurality of communication terminals via a wireless communication, wherein:
when the control terminal receives the information data transmitted from each of the plurality of communication terminals, the control terminal identifies each of the communication terminals as a transmission source of the information data and transmits data receipt acknowledgement to each of the communication terminals; and
each of the plurality of communication terminals repeatedly transmits the information data to the control terminal until receiving the data receipt acknowledgement and, after a predetermined duration passes from an initial transmission of the information data or after predetermined time comes, suspends transmission of the information data until a retransmission request is received from the control terminal.

2. The communication method as set forth in claim 1, wherein the information data is converted to a code having a different bit length in the plurality of communication terminals and transmitted to the control terminal.

3. The communication method as set forth in claim 1 or 2, wherein, after the predetermined duration passes or after the predetermined time comes, the control terminal transmits the retransmission request sequentially to communication terminals except for those, to which the data receipt acknowledgement has been already sent, among the plurality of communication terminals.

4. The communication method as set forth in any one of claims 1 to 3, wherein the predetermined duration or the predetermined time is transmitted from the control terminal to the plurality of communication terminals and stored in each of the plurality of communication terminals.

5. The communication method as set forth in any one of claims 1 to 4, wherein the predetermined wireless communication standard is IEEE 802.15.4 standard.

6. The communication method as set forth in any one of claims 1 to 5, wherein the control terminal predicts the information data to be transmitted from the plurality of communication terminals and stores it as transmission prediction information, obtains correlation values of the transmission prediction information and the actually received information data, and determines the transmission prediction information having the highest correlation value as the information data actually received.

7. The communication method as set forth in claim 6, wherein the control terminal determines that received information data is not received correctly when the highest value of the correlation values is lower than a predetermined threshold.

8. A voting right counting system for shareholders meeting for counting the number of voting rights exercised by shareholders when voting for agendas in a shareholders meeting by using the communication method as set forth in any one of claims 1 to 7, wherein:
each of the plurality of communication terminals comprises a voting-right exercise data input means for a shareholder to input a content of voting right exercise as voting-right exercise data;
the control terminal comprises shareholder information storage means for storing shareholder information including at least information on the number of shares or the number of voting rights each shareholder owns, and a voting right exercise result counting means for counting a result of voting right exercise by shareholders based on the voting-right exercise data and the number of voting rights owned by shareholders based on the information on the number of shares or the number of voting rights included in the shareholder information;
and
each of the plurality of communication terminals transmits as a part of the information data the voting-right exercise data input through the voting-right exercise data input means to the control terminal.

9. The voting right counting system for shareholders meeting as set forth in claim 8, wherein each of the plurality of communication terminals comprises an external memory device for storing agenda information which is specific to a shareholders meeting to be held.

10. The voting right counting system for shareholders meeting as set forth in claim 9, wherein each of the plurality of communication terminals transmits the voting-right exercise data to the control terminal and also stores it in the external memory device.

11. The voting right counting system for shareholders meeting as set forth in claim 8, wherein each of the plurality of communication terminals comprises an IC card reader/writer part.

12. The voting right counting system for shareholders meeting as set forth in claim 11, wherein the plurality of communication terminals transmits the voting-right exercise data to the control terminal and also writes it to an IC card via the IC card reader/writer part.

13. The voting right counting system for shareholders meeting as set forth in claim 9, wherein:
the specific agenda information includes motion information; and
the control terminal transmits a motion information call request to the plurality of communication terminals in the case where a motion and/or urgent motion is proposed in a shareholders meeting.
